(19) Europäisches Patentamt
European Patent Office
Office européen des brevets

(11) **EP 1 834 074 B1**

(12) # FASCICULE DE BREVET EUROPEEN

(45) Date de publication et mention de la délivrance du brevet:
**02.03.2011 Bulletin 2011/09**

(21) Numéro de dépôt: **05824050.8**

(22) Date de dépôt: **01.12.2005**

(51) Int Cl.:
***F02D 41/40*** *(2006.01)* ***F02D 41/02*** *(2006.01)*

(86) Numéro de dépôt international:
**PCT/FR2005/051026**

(87) Numéro de publication internationale:
**WO 2006/064143 (22.06.2006 Gazette 2006/25)**

(54) **PROTECTION D'UN CATALYSEUR D'OXYDATION PLACE EN AMONT DE FILTRE À PARTICULES POUR MOTEUR DIESEL PAR LIMITATION DE CARBURANT INJECTE**

SCHÜTZEN EINES OXIDATIONSKATALYSATORS STROMAUFWÄRTS EINES TEILCHENFILTERS FÜR EINEN DIESELMOTOR DURCH BEGRENZUNG VON EINGESPRITZTEM KRAFTSTOFF

PROTECTING AN OXIDATION CATALYST UPSTREAM OF A PARTICULATE FILTER FOR A DIESEL ENGINE BY LIMITATION OF INJECTED FUEL

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.12.2004 FR 0413262**

(43) Date de publication de la demande:
**19.09.2007 Bulletin 2007/38**

(73) Titulaire: **RENAULT S.A.S.**
**92100 Boulogne Billancourt (FR)**

(72) Inventeurs:
- **DANEAU, Marc**
  **F-92100 Boulogne Billancourt (FR)**
- **JULLIARD, Arnaud**
  **F-92310 Sevres (FR)**
- **PILLOT, Adrien**
  **F-91290 Arpajon (FR)**

(56) Documents cités:
**EP-A- 1 132 584**
**EP-A- 1 411 228**
**EP-A- 1 431 549**
**FR-A- 2 804 168**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 834 074 B1

Printed by Jouve, 75001 PARIS (FR)

## Description

La présente invention se rapporte à un procédé de commande d'un moteur, et à un système de mise en oeuvre associé.

Plus particulièrement, la présente invention se rapporte à un procédé de commande d'un moteur de véhicule, de préférence de type diesel, et à un système de mise en oeuvre associé.

Comme cela est connu en soi, les systèmes d'échappement de véhicules à moteur diesel sont habituellement équipés d'un convertisseur catalytique à oxydation (CO) et d'un filtre à particules (FAP) pour limiter les émissions polluantes dans l'environnement.

Le CO permet de supprimer le rejet d'hydrocarbures imbrûlés et de monoxyde de carbone dans l'environnement. Le FAP permet quant à lui de supprimer le rejet de particules polluantes de suies dans l'environnement.

Pour éviter le colmatage du FAP par accumulation des particules polluantes de suies, il est nécessaire de procéder périodiquement à des opération de régénération du FAP.

Un procédé de régénération de FAP consiste à brûler les particules polluantes contenues dans le FAP. Pour ce faire, on effectue une ou plusieurs injection(s) retardée(s) de gasoil dans des chambres de combustion du moteur lors de la phase de détente. Ce gasoil post-injecté (c'est-à-dire injecté après le point mort haut) ne brûlera pas dans les chambres de combustion, mais sera expulsé dans la ligne d'échappement et converti en gaz inoffensif par le CO.

Lors de cette conversion, le CO dégage de la chaleur. Cette chaleur va permettre d'augmenter la température des gaz à l'intérieur de la ligne d'échappement, et donc d'augmenter la température interne du FAP jusqu'à une température cible à laquelle les particules contenues dans le FAP brûlent. La température à l'intérieur de la ligne d'échappement est fonction de deux variables principales : le débit d'air dans la ligne d'échappement et la quantité de gasoil post-injecté. Pour une quantité de gasoil post-injecté constante, plus le débit d'air diminue, plus la température interne de la ligne d'échappement augmente. Pour un débit d'air constant, plus la quantité de gasoil post-injecté augmente, plus la température interne de la ligne d'échappement augmente.

Dans les systèmes d'échappement de véhicules à moteur diesel, les réglages moteur qui permettent d'atteindre la température cible en entrée du FAP sont réalisés pour un dégagement de chaleur à la limite thermomécanique (ou « température limite avant destruction ») du CO. Par ailleurs, ces réglages moteur sont réalisés en régime établi. C'est-à-dire que pour un débit d'air constant, on détermine la quantité de gasoil à post-injecter pour atteindre la température cible dans la ligne d'échappement.

Or, durant les régimes transitoires, le débit d'air dans la ligne d'échappement n'est pas constant et peut être inférieur au débit d'air en régime établi (ou régime permanent).

Dans ce cas, la quantité de gasoil post-injecté étant constante et le débit d'air étant inférieur au débit d'air en régime établi, la température interne du CO va augmenter et dépasser la limite thermomécanique du CO, entraînant de ce fait une dégradation de celui-ci.

Le document EP 1 132 584 décrit un procédé de commande d'un moteur dans lequel une quantité maximale de carburant à post-injecter est calculée.

Un but de la présente invention est de protéger le CO contre les dégradations liées au dépassement de sa température limite de fonctionnement.

A cet effet on prévoit selon l'invention un procédé de commande d'un moteur comprenant un convertisseur catalytique à oxydation, le procédé comprenant l'étape consistant, si au moins un critère prédéterminé est rempli, à calculer une quantité maximale de carburant à post-injecter à partir d'un débit d'air mesuré et d'une température limite de fonctionnement du convertisseur catalytique à oxydation.

Ce procédé de commande de moteur permet de calculer la quantité maximale autorisée de gasoil à injecter afin d'éviter l'injection tardive de quantités de carburant trop importantes induisant une dégradation du CO par dépassement de la température limite de fonctionnement de celui-ci.

On entend, dans le cadre de la présente invention, par « post-injection » (également connu sous le nom de « injection tardive »), une ou plusieurs injection(s) de carburant dans les chambres de compression après le point mort haut, c'est-à-dire dans la phase de détente du moteur.

On entend, dans le cadre de la présente invention, par « température limite de fonctionnement » la température maximale que peut supporter le CO sans dommage. L'utilisation du CO à une température supérieure à la température limite de fonctionnement entraîne des dégradations de celui-ci.

Des aspects préférés, mais non limitatifs du procédé selon l'invention sont les suivants :

- le procédé comprend en outre l'étape consistant à mesurer le débit d'air dans une ligne d'échappement,
- le ou l'un des critères à vérifier est que le débit d'air mesuré est inférieur à un débit d'air de consigne,
- le procédé comprend en outre les étapes consistant à :
    - mesurer une température d'échappement des gaz dans la ligne d'échappement,

- commander une augmentation de la quantité de carburant post-injecté dans la ligne d'échappement si la température d'échappement mesurée est inférieure à une température de consigne,
- commander une diminution de la quantité de carburant post-injecté dans la ligne d'échappement si la température d'échappement des gaz mesurée est supérieure à la température de consigne.

L'invention concerne également un moteur comprenant un convertisseur catalytique à oxydation, caractérisé en ce qu'il comprend un calculateur apte à calculer une quantité maximale de carburant à post-injecter à partir d'un débit d'air mesuré et d'une température limite de fonctionnement du convertisseur catalytique à oxydation.

Des aspects préférés, mais non limitatifs du système selon l'invention sont les suivants :

- le système comprend en outre un débitmètre apte à mesurer le débit d'air dans la ligne d'échappement,
- le système comprend en outre une sonde de température apte à mesurer une température d'échappement des gaz dans la ligne d'échappement, et le calculateur est en outre apte à commander une augmentation, respectivement une diminution, de la quantité de gasoil post-injecté dans la ligne d'échappement si la température d'échappement mesurée est inférieure, respectivement supérieure, à une température de consigne.

L'invention concerne également un véhicule automobile, le véhicule automobile comprenant un moteur tel que décrit précédemment.

D'autres caractéristiques et avantages de l'invention ressortiront encore de la description qui suit, laquelle est purement illustrative et non limitative et doit être lue en regard des dessins annexés, sur lesquels :

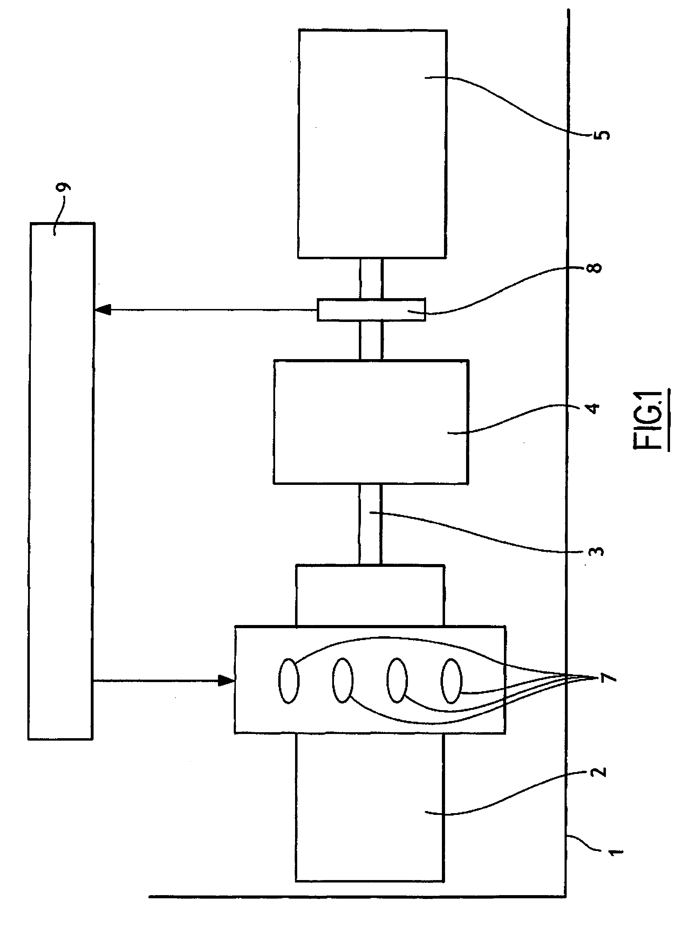

- la figure 1 est un schéma représentant un système de mise en oeuvre du procédé selon l'invention,
- la figure 2 est un graphique représentant la température interne du convertisseur catalytique à oxydation en fonction d'un débit d'air et d'une quantité de gasoil post-injecté.

On a représenté sur cette figure un véhicule automobile 1 comprenant un moteur 2 du type diesel, c'est-à-dire fonctionnant au gasoil, et une ligne d'échappement 3 munie d'un convertisseur catalytique à oxydation 4, d'un débitmètre 8, d'un calculateur 6 et d'un filtre à particules 5.

Le calculateur 6 permet de superviser le fonctionnement du moteur 2, du convertisseur catalytique à oxydation 4 et du filtre à particules 5. Le calculateur comprend par exemple un/des processeur(s), un/des microcontrôleur(s), un/des micro-ordinateur(s), un/des automate(s) programmable(s), un/des circuit(s) intégré(s) spécifique(s) d'application, ou d'autres circuits programmables connus de l'homme de l'art.

Le moteur 2 comprend des chambres de combustion 7 dans lesquelles le gasoil est injecté. L'injection de gasoil dans les chambres de combustion 7 est commandée par le calculateur 6.

Le convertisseur catalytique à oxydation (CO) 4 est situé en amont du filtre à particules (FAP) 5 sur la ligne d'échappement 3, c'est-à-dire que le CO 4 est plus proche du moteur 3 que le FAP 5. Cependant, le CO 4 peut également être directement implanté dans le FAP 5. Le CO 4 comprend un agent catalyseur tel qu'un mélange de palladium et de platine.

Le débitmètre 8 permet de mesurer le débit d'air massique de la ligne d'échappement 3. Le débitmètre 8 peut être n'importe quel type de débitmètre à air tel qu'un appareil de mesure de débit à tube de Pitot ou un modèle.

Le FAP 5 retient les particules qui s'accumulent en son sein au fur et à mesure de l'utilisation du moteur 2. Cette accumulation de particules finit par boucher le FAP 5, créant une forte contre pression à l'échappement du moteur 2 (c'est-à-dire que les gaz ont du mal à s'échapper du moteur), ce qui diminue considérablement ses performances. Afin de recouvrer les performances du moteur 2, on met en oeuvre un procédé de régénération du FAP 5.

Comme précédemment rappelé, le procédé de régénération du FAP 5 consiste à élever la température des gaz d'échappement jusqu'à une température cible pour provoquer la combustion des suies à l'intérieur du FAP 5. Pour ce faire, le calculateur 6 commande des injections tardives, ou post-injections, dans les chambres de combustion 7. Le gasoil post-injecté est expulsé dans la ligne d'échappement 3, puis oxydé dans le CO 4 qui dégage de la chaleur lors de la conversion du gasoil post-injecté en gaz inoffensif. Cette chaleur dégagée par le CO 4 entraîne l'augmentation de la température des gaz à l'intérieur de la ligne d'échappement 3, et donc également l'augmentation de la température interne du FAP.

La quantité de chaleur dégagée par le CO est fonction de la quantité de gasoil post-injecté d'une part, et du débit d'air dans la ligne d'échappement 3 d'autre part. En effet, on a constaté que :

- pour une quantité de gasoil post-injecté constante, plus le débit d'air diminue, plus la température interne du CO augmente ;
- pour un débit d'air constant, plus la quantité de gasoil post-injecté augmente, plus la température interne du CO augmente.

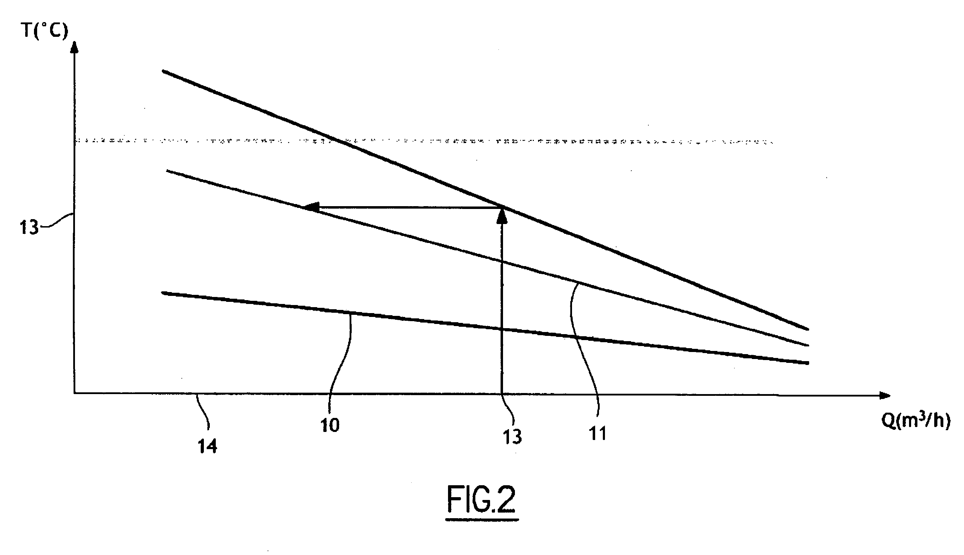

A titre indictif, cette constatation est illustrée à la figure 2 qui est un graphique représentant la température interne du CO (sur l'axe des ordonnées 13) en fonction du débit d'air (sur l'axe des abscisses 14). Ce graphique comprend trois segments 10, 11, 12 obtenus pour trois quantités différentes de gasoil post-injecté.

Le premier segment 10 est obtenu pour une quantité de gasoil post-injecté égale à 5 mg/cp, le deuxième segment 11 est obtenu pour une quantité de gasoil post-injecté égale à 10 mg/cp, et le troisième segment 12 est obtenu pour une quantité de gasoil post-injecté égale à 20 mg/cp.

Ces trois segments 10, 11, 12 sont décroissants, ce qui confirme que plus le débit d'air augmente, plus la température interne du CO diminue. Par ailleurs, l'ensemble des points du troisième segment 12 est situé au dessus de l'ensemble des points du deuxième segment qui est lui-même situé au dessus du premier segment. Ceci confirme que plus la quantité de gasoil post-injecté augmente, plus la température interne du CO augmente.

On a donc:

$$T_{interne\text{-}catalyseur} = f(Q_{air_massique} \,;\, Q_{post_tardive}),$$

Où : $T_{interne\text{-}catalyseur}$ est la température interne du catalyseur,
$Q_{air_massique}$ est le débit d'air massique dans la ligne d'échappement,
$Q_{post_tardive}$ est la quantité de gasoil volumique post-injecté.

Or la quantité de gasoil à post-injecter est réglée pour un débit d'air en régime établi, c'est-à-dire pour un débit d'air constant. Un problème se pose donc lorsque le débit d'air du moteur n'est pas égal au débit d'air en régime établi, notamment sur des transitoires de régime. Dans ces conditions, le débit d'air réel peut alors être inférieur à la valeur considérée en régime établi qui garantissait l'intégrité du CO pour la quantité de post-injection réglée. La température interne au catalyseur est alors supérieure à celle constatée en régime établi, ce qui entraîne une détérioration du CO.

Afin d'éviter les risques de dégradation du CO 4, il est nécessaire de mettre en oeuvre un procédé de commande de moteur permettant de limiter les quantités de gasoil post-injecté tel que celui de la présente invention afin d'assurer que la température des gaz dans la ligne d'échappement ne dépasse pas la température limite avant destruction du CO 4.

Le procédé de commande de moteur pour la limitation des quantités de gasoil post-injecté comprend les étapes suivantes.

Une étape du procédé consiste à mesurer le débit d'air réel dans la ligne d'échappement grâce au débitmètre 8. La valeur mesurée du débit d'air réel est envoyée au calculateur 6 qui la compare à un débit d'air en régime établi utilisé lors des réglages moteur permettant d'atteindre la température cible.

Une autre étape consiste à déterminer suivant un ensemble de critères si une étape de calcul d'une quantité de gasoil post-injecté maximale à autoriser peut être activée. Si le débit d'air réel mesuré est inférieur au débit d'air en régime établi, alors on effectue l'étape de calcul de la quantité de gasoil post-injecté maximale à autoriser.

Une autre étape consiste à calculer la quantité maximum de gasoil post-injecté à autoriser. Pour effectuer cette étape, le calculateur 6 utilise une équation du type :

$$Q_{post_tardive_MAX} = f(Q_{air_massique} \,;\, T_{interne\text{-}catalyseur_MAX}),$$

Où : $Q_{post_tardive_MAX}$ la quantité volumique maximum de gasoil post-injecté à autoriser,
$Q_{air_massique}$ le débit d'air massique mesuré dans la ligne d'échappement,
$T_{interne\text{-}catalyseur_MAX}$ la température limite de fonctionnement du CO.

Le débit d'air massique dans la ligne d'échappement est connu puisque mesuré par le débitmètre 8, la température limite de fonctionnement du CO est connue puisque donnée par le fabriquant, ce qui permet à partir de la forme d'équation donnée ci-dessus de déterminer de la quantité maximum de gasoil post-injecté à autoriser.

Dans une autre étape, le calculateur commande l'injection tardive dans les chambres de combustion d'une quantité de gasoil inférieure ou égale à la quantité maximum calculée de gasoil post-injecté à autoriser.

Le procédé de commande de moteur pour la limitation des quantités de gasoil post-injecté peut être utilisé en complément d'un procédé de régulation de la température dans la ligne d'échappement.

Le procédé de régulation de la température de la ligne d'échappement comprend les étapes suivantes.

Dans une étape, on mesure la température dans la ligne d'échappement grâce à un capteur de température situé en amont du FAP.

Dans une autre étape, si la température mesurée par le capteur de température est inférieure à la température cible, le calculateur commande une augmentation de la quantité de carburant post-injecté pour élever la température des gaz dans la ligne d'échappement jusqu'à la température cible.

Par contre, si la température mesurée par le capteur de température est supérieure à la température cible, le calculateur commande une diminution de la quantité de carburant post-injecté pour diminuer la température des gaz jusqu'à la température cible.

Le procédé de régulation utilise des bornes de saturation pour limiter la quantité de gasoil post-injecté. En utilisant le procédé de limitation de la quantité de gasoil post-injecté dans le calculateur, cela permet d'adapter les bornes de saturation utilisées dans le procédé de régulation de température et ainsi de ne pas risquer de détériorer le catalyseur.

Le moteur employé pour décrire le procédé de commande de moteur était un moteur de véhicule du type diesel, c'est-à-dire fonctionnant au gasoil. Cependant, le procédé de commande de moteur peut être mis en oeuvre dans d'autres catégories de moteur - moteur de nettoyeur haute pression, moteur de bétonnière, etcetera. Le procédé de commande de moteur peut également être mis en oeuvre dans des moteurs fonctionnant avec d'autres carburant comme des moteurs à essence.

Références

1 véhicule automobile
2 moteur
3 ligne d'échappement
4 convertisseur catalytique à oxydation
5 filtre à particules
6 calculateur
7 chambres de combustion
8 débitmètre
10 premier segment
11 deuxième segment
12 troisième segment
13 axe des ordonnées
14 axe des abscisses

**Revendications**

1. Procédé de commande d'un moteur (2) comprenant un convertisseur catalytique à oxydation (4), le procédé comprenant une étape consistant, si au moins un critère prédéterminé est rempli, à calculer une quantité maximale de carburant à post-injecter **caractérisé en ce que** la quantité maximale de carburant à post-injecter est calculée à partir d'un débit d'air mesuré et d'une température limite de fonctionnement du convertisseur catalytique à oxydation (4).

2. Procédé selon la revendication 1, **caractérisé en ce qu'**il comprend en outre l'étape consistant à mesurer le débit d'air dans une ligne d'échappement (3).

3. Procédé selon l'une des revendication 1 ou 2, **caractérisé en ce que** le ou l'un des critères est que le débit d'air mesuré est inférieur à un débit d'air de consigne.

4. Procédé selon la revendication 1, **caractérisé en ce qu'**il comprend en outre les étapes consistant à :

   - mesurer une température d'échappement des gaz dans une ligne d'échappement (3),
   - commander une augmentation de la quantité de carburant post-injecté dans la ligne d'échappement (3) si la température d'échappement mesurée est inférieure à une température de consigne,
   - commander une diminution de la quantité de carburant post-injecté dans la ligne d'échappement (3) si la température d'échappement des gaz mesurée est supérieure à la température de consigne.

5. Moteur comprenant un convertisseur catalytique à oxydation (4) et un calculateur (6) configuré de manière à calculer une quantité maximale de carburant à post-injecter, **caractérisé en ce que** le calculateur est configuré de manière à calculer une quantité maximale de carburant à post-injecter à partir d'un débit d'air mesuré et d'une température limite de fonctionnement du convertisseur catalytique à oxydation (4).

6. Moteur selon la revendication 5, **caractérisé en ce qu'**il comprend en outre un débitmètre (8) apte à mesurer le débit d'air dans la ligne d'échappement (3).

7. Moteur selon la revendication 5, **caractérisé en ce qu'**il comprend en outre une sonde de température apte à mesurer une température d'échappement des gaz dans la ligne d'échappement (3), et **en ce que** le calculateur (6) est en outre apte à commander une augmentation, respectivement une diminution, de la quantité de carburant post-injecté dans la ligne d'échappement (3) si la température d'échappement mesurée est inférieure, respectivement supérieure, à une température de consigne.

8. Véhicule automobile, **caractérisé en ce qu'**il comprend un moteur selon l'une des revendications 5 à 7.

## Claims

1. Method for controlling an engine (2) comprising an oxidation catalytic converter (4), the method comprising a step consisting, if at least one predefined criterion is satisfied, in calculating a maximum quantity of fuel to be post-injected, **characterized in that** the maximum quantity of fuel to be post-injected is calculated from a measured air flow rate and a limit operating temperature of the oxidation catalytic converter (4).

2. Method according to Claim 1, **characterized in that** it further comprises the step consisting in measuring the air flow rate in an exhaust line (3).

3. Method according to either of Claims 1 and 2, **characterized in that** the or one of the criteria is that the measured air flow rate is lower than an air flow rate setpoint.

4. Method according to Claim 1, **characterized in that** it further comprises the steps consisting in:

   - measuring an exhaust gas temperature in an exhaust line (3),
   - ordering an increase in the quantity of fuel post-injected into the exhaust line (3) if the measured exhaust temperature is lower than a temperature setpoint,
   - ordering a decrease in the quantity of fuel post-injected into the exhaust line (3) if the measured exhaust gas temperature is higher than the temperature setpoint.

5. Engine comprising an oxidation catalytic converter (4) and a computer (6) configured for calculating a maximum quantity of fuel to be post-injected, **characterized in that** the computer is configured for calculating a maximum quantity of fuel to be post-injected from a measured air flow rate and a limit operating temperature of the oxidation catalytic converter (4).

6. Engine according to Claim 5, **characterized in that** it further comprises a flowmeter (8) for measuring the air flow rate in the exhaust line (3).

7. Engine according to Claim 5, **characterized in that** it further comprises a temperature probe for measuring the exhaust gas temperature in the exhaust line (3), and **in that** the computer (6) is further capable of ordering an increase, respectively a decrease, in the quantity of fuel post-injected into the exhaust line (3) if the measured exhaust temperature is lower, respectively higher, than a temperature setpoint.

8. Motor vehicle, **characterized in that** it comprises an engine according to one of Claims 5 to 7.

## Patentansprüche

1. Verfahren zur Steuerung eines Motors (2), der einen Oxidationskatalysator (4) enthält, wobei das Verfahren einen Schritt enthält, der, wenn mindestens ein vorbestimmtes Kriterium erfüllt ist, darin besteht, eine maximale nacheinzuspritzende Kraftstoffmenge zu berechnen, **dadurch gekennzeichnet, dass** die maximale nacheinzuspritzende Kraftstoffmenge ausgehend von einem gemessenen Luftdurchsatz und von einer Betriebsgrenztemperatur des Oxidationskatalysators (4) berechnet wird.

2. Verfahren nach Anspruch 1, **dadurch gekennzeichnet, dass** es außerdem den Schritt enthält, der darin besteht, den Luftdurchsatz in einer Auspuffanlage (3) zu messen.

3. Verfahren nach einem der Ansprüche 1 oder 2, **dadurch gekennzeichnet, dass** das oder eines der Kriterien ist, dass der gemessene Luftdurchsatz unter einem Soll-Luftdurchsatz liegt.

4. Verfahren nach Anspruch 1, **dadurch gekennzeichnet, dass** es außerdem die Schritte enthält, die darin bestehen:

   - eine Auspufftemperatur der Gase in einer Auspuffanlage (3) zu messen,
   - eine Erhöhung der in die Auspuffanlage (3) nacheingespritzten Kraftstoffmenge zu steuern, wenn die gemessene Auspufftemperatur unter einer Solltemperatur liegt,
   - eine Verringerung der in die Auspuffanlage (3) nacheingespritzten Kraftstoffmenge zu steuern, wenn die gemessene Auspufftemperatur der Gase über der Solltemperatur liegt.

5. Motor, der einen Oxidationskatalysator (4) und einen Rechner (6) enthält, der so konfiguriert ist, dass er eine maximale nacheinzuspritzende Kraftstoffmenge berechnet, **dadurch gekennzeichnet, dass** der Rechner so konfiguriert ist, dass er ausgehend von einem gemessenen Luftdurchsatz und von einer Betriebsgrenztemperatur des Oxidationskatalysators (4) eine maximale nacheinzuspritzende Kraftstoffmenge berechnet.

6. Motor nach Anspruch 5, **dadurch gekennzeichnet, dass** er außerdem einen Luftdurchsatzmesser (8) enthält, der den Luftdurchsatz in der Auspuffanlage (3) messen kann.

7. Motor nach Anspruch 5, **dadurch gekennzeichnet, dass** er außerdem einen Temperaturfühler enthält, der eine Auspufftemperatur der Gase in der Auspuffanlage (3) messen kann, und dass der Rechner (6) außerdem in der Lage ist, eine Erhöhung bzw. eine Verringerung der in die Auspuffanlage (3) nacheingespritzten Kraftstoffmenge zu steuern, wenn die gemessene Auspufftemperatur unter bzw. über einer Solltemperatur liegt.

8. Kraftfahrzeug, **dadurch gekennzeichnet, dass** es einen Motor nach einem der Ansprüche 5 bis 7 enthält.

9
5
8
4
3
7
2
1
FIG.1

Q(m³/h)
T(°C)
11
13
10
14
13

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1132584 A